# EUROPEAN PATENT SPECIFICATION

(11) **EP 1 354 233 B1**
(45) Date of publication and mention of the grant of the patent: **13.06.2012**
(21) Application number: 02728328.2
(22) Date of filing: 18.01.2002
(51) Int. Cl.: G02B 6/44

(54) **OPTICAL FIBER CABLE**
FASEROPTISCHES KABEL
CABLE A FIBRES OPTIQUES

(30) Priority: 26.01.2001 US 264549 P
(43) Date of publication of application: 22.10.2003
(73) Proprietor: AFL Telecommunications LLC, Duncan SC 29334 (US)
(72) Inventor: MILITARU, Cristian, Duncan, SC 29334 (US); DAVIS, Lawrence, E., Greenville, SC 29601-5927 (US)
(74) Representative: Hoarton, Lloyd Douglas Charles
(86) International application number: PCT/US2002/001622
(87) International publication number: WO 2002/079846

(56) References cited:
- EP-A- 0 710 862
- FR-A- 2 718 564
- GB-A- 2 064 163
- GB-A- 2 084 757

## Description

The present invention relates to optical fiber cables and, more particularly, to an improved geometric arrangement of elements forming an optical fiber cable.

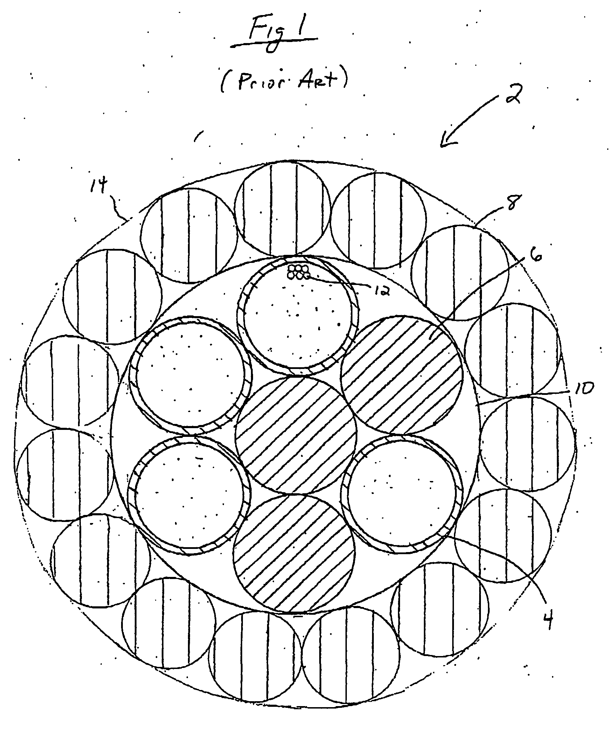

With reference to Fig. 1, a prior art optical fiber cable assembly 2 includes a plurality of fiber optic tubes 4 and a plurality of adjacent wires 6 which provide some support to the cable design. A plurality of grounding members 8 surround tubes 4 and wires 6. When viewed from an end of optical fiber cable assembly 2, tubes 4 and wires 6 are received within an imaginary tube 10 which extends along the length of fiber optic cable assembly 2. Preferably, one wire 6 is positioned centrally within imaginary tube 10. This centrally positioned wire 6 is surrounded by tubes 4 and, if desired, other wires 6. The positions of tubes 4 and wires 6 around the centrally positioned wire 6 are determined based on the number of optical fibers 12 comprising optical fiber cable assembly 2. In the illustrated embodiment a few optical fibers 12 are shown received within one of tubes 4. Preferably, however, each tube 4 is substantially filled with optical fibers 12.

In an exemplary embodiment of optical fiber cable assembly 2, tubes 4 and wires 6 surrounding the centrally positioned wire 6 have the same diameter and central wire 6 typically has a slightly larger diameter. The diameters of the various wires 6 and tubes 4 are selected so that each wire 6 and each tube 4 is tangent to any adjacent tubes 4 and/or wires 6. Similarly, each ground member 8 has a diameter that is selected so that each ground member 8 is tangent to its adjacent ground members 8. In practice, however, due to minor manufacturing variations in the diameters of grounding members 8, wires 6 and/or tubes 4, one or more grounding members 8 may not be tangent with their adjacent grounding members 8.

Preferably, along the length of optical fiber cable assembly 2, tubes 4 and wires 6 are spiral wound in a first direction and grounding members 8 are spiral wound in a second direction, opposite the first direction. Because of this difference in winding directions and the tension applied to each grounding member 8 along its length, grounding members 8 tend to stay positioned tangent to imaginary tube 10. However, in practice, it is expected that there may be slight variations in the tangency of one or more grounding members 8 relative to imaginary tube 10 along the length of optical fiber cable assembly 2. Similarly, subject to minor manufacturing variations, grounding members 8 are essentially tangent to an imaginary tube 14 which surrounds grounding members 8 and which extends along the length of optical fiber cable assembly 2.

One problem with designs of optical fiber cable assemblies, like optical fiber cable assembly 2, is that the selection of wires 6 having the same, or nearly the same, outside diameter as tubes 4 increases the diameter and linear weight of optical fiber cable assembly 2. In addition, the number of tubes 4 comprising optical fiber cable assembly 2 will determine the number of wires 6 that can be utilized while maintaining the same geometric arrangement shown in Fig. 1. For example, in the geometric arrangement of optical fiber cable assembly 2 shown in Fig. 1, the sum of tubes 4 and wires 6 equals seven. Hence, the possible combination of tubes/wires is 1/6, 2/5, 3/4, 4/3, 5/2 and 6/1. As can be seen, the number of wires 6 decreases as the number of tubes 4 increases, and vice versa. However, the use of fewer wires 6 when there are more tubes 4, and vice versa, is counter to the need to increase the number of wires 6, thereby increasing the loading capacity of optical fiber cable assembly 2, when increasing the number of tubes 4. This need for increased loading capacity is based upon the increased weight of four tubes 4, each including optical fibers 12, versus the weight of three tubes 4. More specifically, optical fiber cable assembly 2 is designed for aerial insulation between utility poles or towers. As a result, in addition to supporting its own weight (self loading), optical fiber cable assembly 2 must also be designed to withstand weather related loads, such as wind loads, ice loads and snow loads. Hence, decreasing the number of wires 6 while simultaneously increasing the number of tubes 4 is contrary to the need to increase the capacity of optical fiber cable assembly 2 to withstand weather related loads by increasing the number of wires 6 when the number of tubes 4 is increased.

In addition, because of the geometric arrangement of tubes 4, wires 6 and grounding members 8 shown in Fig. 1, optical fiber cable assembly 2 has an outside diameter defined by imaginary tube 14. As would be appreciated by one of ordinary skill in the art, the diameter of imaginary tube 14 affects the possible weather related loads that could be experienced by optical fiber cable assembly 2. Namely, increasing the outside diameter of imaginary tube 14 increases the possible weather related loads that could be experienced by optical fiber cable assembly 2. In contrast, decreasing the outside diameter of imaginary tube 14 decreases the possible weather related loads that could be experienced by optical fiber cable assembly 2. Accordingly, in the design of optical fiber cable assemblies it is desirable to minimize the outside diameter while simultaneously maintaining or increasing the number of tubes 4 for a given outside diameter while, at the same time, providing a sufficient number of wires 6 of sufficient capacity to withstand expected self loading and possible weather related loads thereon when optical fiber cable assembly 2 is installed. However, the geometric arrangement of tubes 4, wires 6 and grounding members 8 forming current optical fiber cable assemblies does not provide such an optimum design.
FR-A-2718564 describes a self-supporting fiber optic cable assembly. The assembly comprises a central wire, a layer of inner members wound around the inner wire and a layer of outer wires wound around the inner members. One or more of the inner members may be in the form of a tube which contains optical fibers.
The present invention seeks to provide an improved optical fiber cable assembly.
According to one aspect of the present invention, there is provided an optical fiber cable assembly as defined in claim 1 hereinafter.

Embodiments of the present invention seek to overcome the above problems and others by providing a new optical fiber cable assembly that has an improved geometric design over the prior art fiber optic cable assemblies. This improved geometric design enables the same number of optical fibers to be received in a smaller diameter then a prior art optical fiber cable assembly having the same number of optical fibers. In addition, the improved geometric design of the new fiber optic cable assembly enables the use of smaller diameter wires and grounding members while maintaining an amount of self loading capacity and weather related loading capacity that is commensurate with the outside diameter and linear weight of the new fiber optic cable assembly. Still other benefits will become apparent to those of ordinary skill in the art upon reading and understanding the following detailed description.

Accordingly, I have invented an optical cable assembly that includes a plurality of elongated cylindrical fiber optic tubes arranged with their axes extending in the same direction. The axis of each fiber optic tube is positioned at a corner of (i) an imaginary triangle (ii) or an imaginary square. The plurality of fiber optic tubes are arranged with each fiber optic tube tangent to two other fiber optic tubes and a first imaginary tube which surrounds the fiber optic tubes and which has an imaginary axis which extends in the same direction as the axes of the fiber optic tubes. Each pair of adjacent fiber optic tubes and the first imaginary tube define therebetween an interstitial space. The optical fiber cable assembly further includes a plurality of elongated cylindrical interstitial members. Each interstitial member is received in one of the interstitial spaces tangent to the two fiber optic tubes and the first imaginary tube defining the interstitial space, with the axis of each interstitial member extending in the same direction as the axes of the fiber optic tubes.

A plurality of elongated cylindrical grounding members surround the plurality of tubes and the plurality of interstitial members. The axes of the grounding members extend in the same direction as the axes of the fiber optic tubes. The plurality of grounding members are arranged whereupon each grounding member is tangent to two other grounding members and the first imaginary tube.

I have also invented an optical fiber cable assembly comprising a plurality of elongated fiber optic conduits received around a longitudinally extending central axis with a longitudinal axis of each fiber optic conduit extending in the same direction as the central axis and with each fiber optic conduit tangent to two other fiber optic conduits. The plurality of fiber optic conduits define a first interstitial space therebetween and define a plurality of second interstitial spaces between each pair of fiber optic conduits on a side thereof opposite the first interstitial space. A plurality of elongated interstitial members are received around the central axis with their longitudinal axes extending in the same direction as the central axis. Each second interstitial space receives one of the interstitial members tangent to the pair of fiber optic conduits defining the second interstitial space.

When viewed from an end of the optic fiber cable assembly, the longitudinal axis of each fiber optic conduit is positioned at one corner of (i) an imaginary triangle or (ii) an imaginary square.

The interstitial members and the fiber optic conduits are also tangent to a first imaginary tube which surrounds the interstitial members and the fiber optic conduits and which has a longitudinal axis coaxial with the central axis.

A central interstitial member can be received in the first interstitial space with an axis of the central interstitial member coaxial with the central axis. When viewed from an end of the optical fiber cable assembly, the first interstitial space is defined by four fiber optic conduits having their axes positioned at corners of the imaginary square.

A plurality of grounding members surrounds the interstitial members and the fiber optic conduits with the longitudinal axes of the grounding members extending in the same direction as the central axis. The plurality of grounding members is arranged with each grounding member tangent to two other grounding members and the first imaginary tube.

Fig. 1 is an end view of a prior art optical fiber cable assembly;

Fig. 2 is an end view of an optical fiber cable assembly in accordance with one embodiment of the present invention; and

Fig. 3 is an end view of an optical fiber cable assembly in accordance with another embodiment of the present invention.

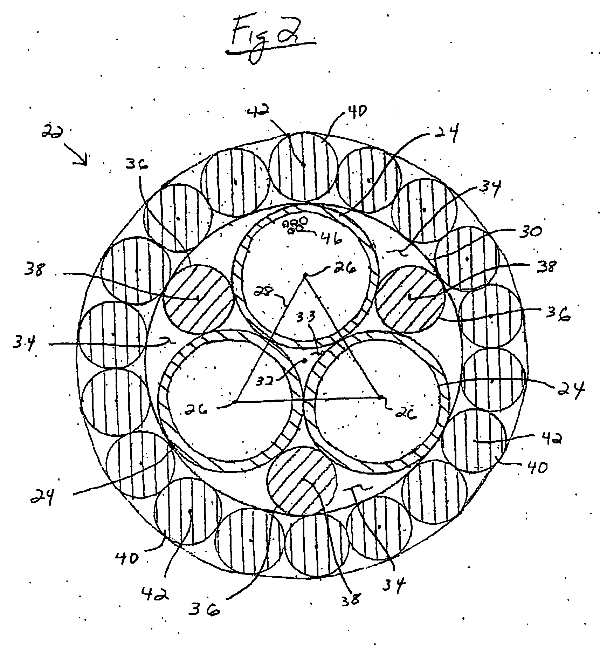

With reference to Fig. 2, in accordance with one embodiment of the present invention, an optical fiber cable assembly 22 includes a plurality of elongated cylindrical conduits or fiber optic tubes 24 arranged with their longitudinal axes 26 extending in the same direction. In this embodiment, when viewed from an end of optical fiber cable assembly 22, the axis 26 of each fiber optic tube 24 is positioned at one corner of an imaginary triangle 28. Fiber optic tubes 24 are arranged so that each fiber optic tube 24 is tangent to the other two fiber optic tubes 24 and a first imaginary tube 30 which surrounds fiber optic tubes 24. First imaginary tube 30 has a longitudinal axis 32 which is received in a first, central interstitial space 33 defined by fiber optic tubes 24 and which extends in the same direction as the axes 26 of fiber optic tubes 24. Each pair of adjacent fiber optic tubes 24 and first imaginary tube 30 define therebetween a second interstitial space 34.

Optical fiber cable assembly 22 further includes a plurality of elongated cylindrical wires or interstitial members 36. Each interstitial member 36 is received in one of the second interstitial spaces 34 tangent to the two fiber optic tubes 24 and first imaginary tube 30 defining the second interstitial space 34. Interstitial members 36 are positioned in second interstitial spaces 34 with their longitudinal axes 38 extending in the same direction as axes 26 of fiber optic tubes 24.

A plurality of elongated cylindrical grounding members 40 surround fiber optic tubes 24 and interstitial members 36. Grounding members 40 have longitudinal axes 42 which extend in the same direction as axes 26 of fiber optic tubes 24. At each point along the length of fiber optic cable assembly 22, each grounding member 40 is preferably tangent to its two adjacent grounding members 40 and first imaginary tube 30.

Along the length of optical fiber cable assembly 22, fiber optic tubes 24 and interstitial members 36 are wound spirally in a first direction around axis 32 and grounding members 40 are wound spirally in a second direction, opposite the first direction, around axis 32. As a result of these different spiral winding directions, each grounding member 40 is tangent to each fiber optic tube 24 and each second interstitial member 36 at various spaced points along the length of optical fiber cable assembly 22.

Fiber optic tubes 24 and interstitial members 36 are wound spirally at a winding pitch preferably between ten and sixteen times, and more preferably thirteen and one-half times, the diameter of first imaginary tube 30. Grounding members 40 are wound spirally at a winding pitch preferably between ten and sixteen times, and more preferably thirteen and one-half times, the diameter of a second imaginary tube 44 which is coaxial with first imaginary tube 30 and which surrounds and is tangent to grounding members 40.

In an exemplary embodiment of optical fiber cable assembly 22, each fiber optic tube 24 has an inside diameter of 3.4 millimeters, an outside diameter of 3.8 millimeters and is preferably formed from stainless steel. The inside diameter of 3.4 millimeters enables each fiber optic tube 24 to receive up to seventy-two optical fibers 46. Each interstitial member 36 has an outside diameter of 1.83 millimeters and is preferably formed from an aluminum alloy, such as aluminum alloy 6201. Each grounding member 40 has an outside diameter of 2.45 millimeters and is preferably formed from an aluminum clad steel. In this exemplary embodiment, second imaginary tube 44 has an outside diameter of 13.09 millimeters and first imaginary tube 30 has an outside diameter of 8.19 millimeters.

Preferably, each interstitial member 36 and each grounding member 40 is formed from a solid wire. However, this is not to be construed as limiting the invention since each interstitial member 36 and/or each grounding member 40 can also be formed from stranded wires.

Preferably and in practice, fiber optic tubes 24 and interstitial members 36 have a 100% wire fit. That is, each fiber optic tube 24 is tangent to the two other fiber optic tubes 24 and the adjacent interstitial member 36. In addition, grounding members 40 preferably have a 100% wire fit. However, in practice, grounding members 40 have a wire fit that is preferably no less than 98.89%. Thus, one or more small gaps may exist between one or more adjacent grounding members 40. In practice, however, most grounding members 40 are tangent to their adjacent grounding members 40.

It is to be appreciated that the exemplary embodiment shown in Fig. 2 is provided to illustrate a single example of optical fiber cable assembly 22. However, this exemplary embodiment is not to be construed as limiting the present invention since the outside diameters of tubes 24, interstitial members 36 and grounding members 40 can be sized as desired.

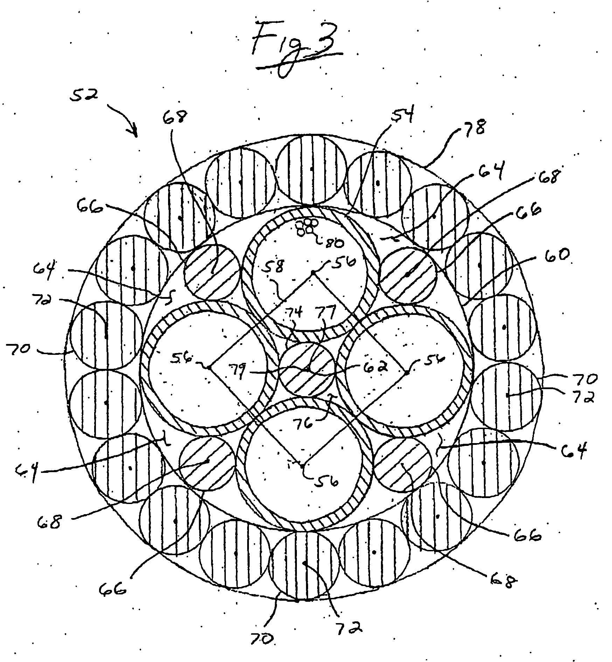

With reference to Fig. 3, in accordance with another embodiment of the present invention, an optical fiber cable assembly 52 includes a plurality of elongated cylindrical conduits or fiber optic tubes 54 arranged with their longitudinal axes 56 extending in the same direction. In this embodiment, when viewed from an end of optical fiber cable assembly 52, the axis 56 of each fiber optic tube 54 is positioned at one corner of an imaginary diamond or square 58. Fiber optic tubes 54 are arranged so that each fiber optic tube 54 is tangent to its two adjacent fiber optic tubes 54 and a first imaginary tube 60 which surrounds fiber optic tubes 54. First imaginary tube 60 has a longitudinal axis 62 which is received in a first, central interstitial space 76 formed between fiber optic tubes 54 and which extends in the same direction as axes 56 of fiber optic tubes 54. Each pair of adjacent fiber optic tubes 54 and first imaginary tube 60 define therebetween a second interstitial space 64.

Optical fiber cable assembly 52 further includes a plurality of elongated cylindrical interstitial members 66. Each interstitial member 66 is received in one of the second interstitial spaces 64 tangent to the two fiber optic tubes 54 and the portion of first imaginary tube 60 defining the interstitial space 64. Each interstitial member 66 includes a longitudinal axis 68 which extends in the same direction as axes 56 of fiber optic tubes 54.

A plurality of elongated cylindrical grounding members 70 surround fiber optic tubes 54 and interstitial members 66. Grounding members 70 have longitudinal axes 72 which extend in the same direction as axes 56 of fiber optic tubes 54. At each point along a length of optical fiber cable assembly 52, each grounding member 70 is preferably tangent to its two adjacent grounding members 70 and first imaginary tube 60.

Optical fiber cable assembly 52 further includes a central elongated cylindrical interstitial member 74 which is received in central interstitial space 76 tangent to fiber optic tubes 54. Central interstitial member 74 includes a central axis 77 which is coaxial with axis 62 of first imaginary tube 60.

Along the length of optical fiber cable assembly 52, fiber optic tubes 54 and interstitial members 66 are wound spirally in a first direction around axis 62 and grounding members 70 are wound spirally in a second direction, opposite the first direction, around axis 62. As a result of these different spiral winding directions, each grounding member 70 is tangent to each fiber optic tube 54 and each second interstitial member 66 at various spaced points along the length of optical fiber cable assembly 52.

Fiber optic tubes 54 and interstitial members 66 are wound spirally at a winding pitch preferably between ten and sixteen times, and more preferably thirteen and one-half times, the diameter of first imaginary tube 60. Grounding members 70 are wound spirally at a winding pitch preferably between ten and sixteen times, and more preferably thirteen and one-half times, the diameter of a second imaginary tube 78 which is coaxial with first imaginary tube 60 and which surrounds and is tangent to grounding members 70.

In an exemplary embodiment of optical fiber cable assembly 52, fiber optic tubes 54, interstitial members 66 and grounding members 70 are formed from the same materials used to form fiber optic tubes 24, interstitial members 36 and grounding members 40 of optical fiber cable assembly 22 discussed above in connection with Fig. 2. In this exemplary embodiment, each fiber optic tube 54 has an inside diameter of 3.4 millimeters and an outside diameter of 3.8 millimeters. The inside diameter of 3.4 millimeters enables each fiber optic tube 54 to receive up to seventy-two optical fibers 80. Each interstitial member 66 and central interstitial member 74 has an outside diameter of 1.57 millimeters and each grounding member 70 has an outside diameter of 2.5 millimeters. In this exemplary embodiment, second imaginary tube 78 has an outside diameter of 13.49 millimeters and first imaginary tube 60 has an outside diameter of 8.69 millimeters.

Preferably, each interstitial member 66 and each grounding member 70 is formed from a solid wire. However, this is not to be construed as limiting the invention since each interstitial member 66 and each grounding member 70 can be formed from stranded wires.

Preferably and in practice, fiber optic tubes 54 and interstitial members 66 have a 100% wire fit. In addition, grounding members 70 preferably have a 100% wire fit. However, in practice, grounding members 70 have a wire fit that is preferably no less than 98.89%. Thus, one or more small gaps may exist between one or more adjacent grounding members 70. In practice, however, most grounding members 70 are tangent to their adjacent grounding members 70.

It is to be appreciated that the exemplary embodiment shown in Fig. 3 is provided to illustrate a single example of optical fiber cable assembly 52. However, this exemplary embodiment is not to be construed as limiting the present invention since the outside diameters of tubes 54, interstitial members 66 and grounding wires 70 can be sized as desired.

The optical fiber cable assembly 22 or 52 in accordance with embodiments of the present invention has a diameter that is 12 to 15% smaller than prior art fiber optic cable assemblies capable of carrying the same number of optical fibers. This reduced diameter decreases the susceptibility of the optical fiber cable assembly to weather related loads. In addition, the use of smaller diameter interstitial wires and grounding members reduces the overall linear weight of the fiber optic cable assembly over prior art optical fiber cable assemblies capable of carrying the same number of optical fibers. This reduced weight decreases the self loading of the optical fiber cable assembly.

The invention has been described with reference to the preferred embodiments. Obvious modifications and alterations will occur to others upon reading and understanding the preceding detailed description. For example, in the preceding detailed description, the word "tangent" is utilized to describe a touching relationship between elements. However, due to minor manufacturing variations, some elements may have small gaps therebetween. Accordingly, in the preceding description, the word "tangent" is also intended to be construed as including a relationship where elements may be tangent at most points along the length of the optical fiber cable assembly, but may not be touching at a few points along the length of the optical fiber cable assembly due to these minor variations. It is intended that the invention be construed as including all such modifications and alterations insofar as they come within the scope of the appended claims and the equivalents thereof.

## Claims

1. An optical fiber cable assembly comprising:
a plurality of elongated fiber optic conduits (24) received around a longitudinally extending central axis (32) with a longitudinal axis (26) of each fiber optic conduit (24) extending in the same direction as the central axis (32) and with each fiber optic conduit (24) tangent to two other fiber optic conduits (24), the plurality of fiber optic conduits (24) defining a first interstitial space (33) therebetween with each pair of adjacent fiber optic conduits (24) further defining a respective one of a plurality of separate, second interstitial spaces (34) surrounding the first interstitial space (33);
a plurality of elongated interstitial members (36) received around the central axis (32) with their longitudinal axes (38) extending in the same direction as the central axis (32), each second interstitial space (34) receiving one of the second interstitial members (36) tangent to the respective pair of fiber optic conduits (24) defining the second interstitial space (34),
a plurality of grounding members (40) surrounding the interstitial members (36) and the fiber optic conduits (24) with the longitudinal axes (42) of the grounding members (40) extending in the same direction as the central axis (32), the plurality of grounding members (40) arranged with each grounding member (40) tangent to two other grounding members (40) and a first imaginary tube which surrounds the interstitial members (36) and the fiber optic conduits (24) and which has a longitudinal axis coaxial with the central axis (32) **characterised in that**:
the fiber optic conduits (24) and the interstitial members (36) are wound spirally in a first direction around the central axis (32); and
the grounding members (40) are wound spirally in a second direction, opposite the first direction, around the central axis (32), such that at various spaced points along the length of the optical fiber cable, each grounding member (40) is tangent to each fiber optic conduit (24) and each interstitial member (36); and
wherein, when viewed from an end of the optical fiber cable assembly, the longitudinal axis (26) of each fiber optic conduit (24) is positioned at a corner of one of (i) an imaginary equilateral triangle and (ii) an imaginary square.

2. The optical fiber cable assembly as set forth in claim 1 wherein each fiber optic conduit (24) is positioned at a corner of an imaginary equilateral triangle

3. The optical fiber cable assembly as set forth in claim 1, wherein the interstitial members (36) and the fiber optic conduits (24) are also tangent to the imaginary tube.

4. The optical fiber cable assembly as set forth in claim 1, further including a central interstitial member (74) received in the first interstitial space (76) with an axis (77) of the central interstitial member (74) coaxial with the central axis (62).

5. The optical fiber cable assembly as set forth in claim 1, wherein, when viewed from an end of the optical fiber cable assembly, the first interstitial space (76) is defined by four fiber optic conduits (24) having their axes positioned at corners of an imaginary square.

6. The optical fiber cable assembly as set forth in claim 1, wherein said fiber optic conduits (24) have an inside diameter of approximately 3.4 millimeters and an outside diameter of 3.8 millimeters.

7. The optical fiber cable assembly as set forth in claim 1, wherein said first imaginary tube has an outside diameter of approximately 8.19 millimeters.

8. The optical fiber cable assembly as set forth in claim 1, wherein said grounding members (40) have a wire fit that is not less than 98.89 percent.

9. The optical fiber cable assembly as set forth in claim 1, wherein said grounding members (40) are wound spirally at a winding pitch between ten and sixteen times the diameter of said first imaginary tube.

10. The optical fiber cable assembly as set forth in claim 1, wherein said fiber optic conduits (24) are comprised of stainless steel.

11. The optical fiber cable assembly as set forth in claim 1, wherein said first imaginary tube has an outside diameter of approximately 8.69 millimeters.

## Patentansprüche

1. Glasfaserkabelanordnung, umfassend:
mehrere längliche Glasfaserleitungen (24), die rund um eine länglich verlaufende Mittelachse (32) aufgenommen sind, wobei eine Längsachse (26) jeder Glasfaserleitung (24) in derselben Richtung wie die Mittelachse (32) verläuft und jede Glasfaserleitung (24) zwei andere Glasfaserleitungen (24) berührt, wobei die mehreren Glasfaserleitungen (24) einen ersten interstitiellen Raum (33) zwischen sich begrenzen, wobei jedes Paar nebeneinander liegender Glasfaserleitungen (24) weiterhin einen jeweiligen von mehreren separaten zweiten interstitiellen Räumen (34) begrenzt, die den ersten interstitiellen Raum (33) umgeben;
mehrere längliche interstitielle Elemente (36), die rund um die Mittelachse (32) aufgenommen sind, wobei sich ihre Längsachsen (38) in derselben Richtung wie die Mittelachse (32) erstrecken, wobei jeder zweite interstitielle Raum (34) eines der zweiten interstitiellen Elemente (36) aufnimmt, die das jeweilige Paar von Glasfaserleitungen (24) berühren, die den zweiten interstitiellen Raum (34) begrenzen,
mehrere Erdungselemente (40), die die interstitiellen Elemente (36) und die Glasfaserleitungen (24) umgeben, wobei sich die Längsachsen (42) der Erdungselemente (40) in derselben Richtung wie die Mittelachse (32) erstrecken, wobei die mehreren Erdungselemente (40) so angeordnet sind, dass jedes Erdungselement (40) zwei andere Erdungselemente (40) und ein erstes imaginäres Rohr berührt, das die interstitiellen Elemente (36) und die Glasfaserleitungen (24) umgibt und eine Längsachse aufweist, die mit der Mittelachse (32) koaxial ist, **dadurch gekennzeichnet, dass**:
die Glasfaserleitungen (24) und die interstitiellen Elemente (36) spiralförmig in einer ersten Richtung um die Mittelachse (32) gewickelt sind; und
die Erdungselemente (40) spiralförmig in einer zweiten Richtung, entgegengesetzt zur ersten Richtung, um die Mittelachse (32) gewickelt sind, so dass jedes Erdungselement (40) an verschiedenen beabstandeten Punkten entlang der Länge des Glasfaserkabels jede Glasfaserleitung (24) und jedes interstitielle Element (36) berührt; und
wobei, von einem Ende der Glasfaserkabelanordnung gesehen, die Längsachse (26) jeder Glasfaserleitung (24) an einer Ecke von (i) einem imaginären gleichseitigen Dreieck oder (ii) einem imaginären Quadrat positioniert ist.

2. Glasfaserkabelanordnung nach Anspruch 1, wobei jede Glasfaserleitung (24) an einer Ecke eines imaginären gleichseitigen Dreiecks positioniert ist.

3. Glasfaserkabelanordnung nach Anspruch 1, wobei die interstitiellen Elemente (36) und die Glasfaserleitungen (24) das imaginäre Rohr ebenfalls berühren.

4. Glasfaserkabelanordnung nach Anspruch 1, weiterhin einschließlich eines zentralen interstitiellen Elements (74), das im ersten interstitiellen Raum (76) aufgenommen ist, wobei eine Achse (77) des zentralen interstitiellen Elements (74) mit der Mittelachse (62) koaxial ist.

5. Glasfaserkabelanordnung nach Anspruch 1, wobei der erste interstitielle Raum (76), von einem Ende der Glasfaserkabelanordnung gesehen, von vier Glasfaserleitungen (24) begrenzt ist, deren Achsen an Ecken eines imaginären Quadrats positioniert sind.

6. Glasfaserkabelanordnung nach Anspruch 1, wobei die Glasfaserleitungen (24) einen Innendurchmesser von ungefähr 3,4 Millimetern und einen Außendurchmesser von 3,8 Millimetern aufweisen.

7. Glasfaserkabelanordnung nach Anspruch 1, wobei das erste imaginäre Rohr einen Außendurchmesser von ungefähr 8,19 Millimetern aufweist.

8. Glasfaserkabelanordnung nach Anspruch 1, wobei die Erdungselemente (40) eine Drahtpassung aufweisen, die nicht weniger als 98,89 Prozent beträgt.

9. Glasfaserkabelanordnung nach Anspruch 1, wobei die Erdungselemente (40) spiralförmig mit einer Wicklungsteilung zwischen dem Zehn- und Sechzehnfachen des Durchmessers des ersten imaginären Rohrs gewickelt sind.

10. Glasfaserkabelanordnung nach Anspruch 1, wobei die Glasfaserleitungen (24) aus Edelstahl bestehen.

11. Glasfaserkabelanordnung nach Anspruch 1, wobei das erste imaginäre Rohr einen Außendurchmesser von ungefähr 8,69 Millimetern aufweist.

## Revendications

1. Un ensemble de câble à fibres optiques se composant de ce qui suit :
plusieurs conduits de fibres optiques allongés (24) logés autour d'un axe central longitudinal (32), l'axe longitudinal (26) de chaque conduit de fibres optiques (24) allant dans la même direction que l'axe central (32) et chaque conduit de fibres optiques (24) étant tangent à deux autres conduits de fibres optiques (24), les différents conduit de fibres optiques (24) définissant un premier espace interstitiel (33) entre, chaque paire de conduits de fibres optiques adjacents (24) définissant en outre un parmi plusieurs deuxièmes espaces interstitiels séparés (34) entourant le premier espace interstitiel (33) ;
plusieurs organes interstitiels allongés (36) logés autour de l'axe central (32), leurs axes longitudinaux (38) allant dans la même direction que l'axe central (32), chaque deuxième espace interstitiel (34) recevant un des deuxièmes organes interstitiels (36) tangents à la paire respective de conduits de fibres optiques (24) définissant le deuxième espace interstitiel (34) ;
plusieurs organes de mise à la masse (40) entourant les organes interstitiels (36) et les conduits de fibres optiques (24), les axes longitudinaux (42) des organes de mise à la masse (40) allant dans la même direction que l'axe central (32), les différents organes de mise à la masse (40) étant disposés avec chaque organe de mise à la masse (40) tangent à deux autres organes de mise à la masse (40) et un premier tube fictif qui entoure les organes interstitiels (36) et les conduits de fibres optiques (24) et qui possède un axe longitudinal coaxial avec l'axe central (32) **se caractérisant par** ce qui suit :
les conduits de fibres optiques (24) et les organes interstitiels (36) sont enroulés en spirale dans une première direction autour de l'axe central (32) ; et
les organes de mise à la masse (40) sont enroulés en spirale dans une deuxième direction opposée à la première, autour de l'axe central (32), de manière telle que, à plusieurs endroits espacés le long du câble à fibres optiques, chaque organe de mise à la masse (40) est tangent à chaque conduit de fibres optiques (24) et chaque organe interstitiel (36) ; et
dans lequel, vu d'une extrémité de l'ensemble de câble à fibres optiques, l'axe longitudinal (26) de chaque conduit de fibres optiques (24) est positionné à un angle (i) d'un triangle équilatéral fictif ou (ii) d'un carré fictif.

2. L'ensemble de câble à fibres optiques de la revendication 1, dans lequel chaque conduit de fibres optiques (24) est positionné à un angle d'un triangle équilatéral fictif.

3. L'ensemble de câble à fibres optiques de la revendication 1, dans lequel les organes interstitiels (36) et les conduits de fibres optiques (24) sont également tangents au tube fictif.

4. L'ensemble de câble à fibres optiques de la revendication 1 comprenant également un organe interstitiel central (74) logé dans le premier espace interstitiel (76), un axe (77) de l'organe interstitiel central (74) étant coaxial à l'axe central (62).

5. L'ensemble de câble à fibres optiques de la revendication 1, dans lequel, vu d'une extrémité de l'ensemble de câble à fibres optiques, le premier espace interstitiel (76) est défini par quatre conduits de fibres optiques (24) dont les axes sont positionnés aux angles d'un carré fictif.

6. L'ensemble de câble à fibres optiques de la revendication 1, dans lequel lesdits conduits de fibres optiques (24) possèdent un diamètre intérieur d'environ 3,4 millimètres et un diamètre extérieur de 3,8 millimètres.

7. L'ensemble de câble à fibres optiques de la revendication 1, dans lequel le premier tube fictif possède un diamètre extérieur d'environ 8,19 millimètres.

8. L'ensemble de câble à fibres optiques de la revendication 1, dans lequel lesdits organes de mise à la masse (40) possèdent un fil de pas moins de 98,89 pour cent.

9. L'ensemble de câble à fibres optiques de la revendication 1, dans lequel lesdits organes de mise à la masse (40) sont enroulés en spirale à un pas d'enroulement d'entre dix et seize fois le diamètre du premier tube fictif.

10. L'ensemble de câble à fibres optiques de la revendication 1, dans lequel lesdits conduits de fibres optiques (24) sont composés d'acier inoxydable.

11. L'ensemble de câble à fibres optiques de la revendication 1, dans lequel le premier tube fictif possède un diamètre extérieur d'environ 8,69 millimètres.
